Europäisches Patentamt

European Patent Office

Office européen des brevets

(19)

(11)  **EP 1 443 320 A2**

(12)    **EUROPÄISCHE PATENTANMELDUNG**

(43) Veröffentlichungstag:
  **04.08.2004  Patentblatt 2004/32**

(51) Int Cl.⁷: $G01N\ 21/77$

(21) Anmeldenummer: **04010991.0**

(22) Anmeldetag: **10.09.1998**

(84) Benannte Vertragsstaaten:
  **CH DE FR GB IT LI NL SE**

(30) Priorität: **10.09.1997  CH 212797**

(62) Dokumentnummer(n) der früheren Anmeldung(en)
  nach Art. 76 EPÜ:
  **98941205.1 / 1 012 580**

(71) Anmelder: **Artificial Sensing Instruments ASI AG**
  **8052 Zürich (CH)**

(72) Erfinder: **Tiefenthaler, Kurt**
  **8046 Zürich (CH)**

(74) Vertreter: **Frei Patent Attorneys**
  **Frei Patentanwaltsbüro,**
  **Postfach 768**
  **8029 Zürich (CH)**

Bemerkungen:
  Diese Anmeldung ist am 08 - 05 - 2004 als
  Teilanmeldung zu der unter INID-Kode 62
  erwähnten Anmeldung eingereicht worden.

(54)    **Sensorchip zur Charakterisierung einer chemischen und/oder biochemischen Substanz**

(57)    Der Sensorchip zur Verwendung in einem optischen Sensor zur Charakterisierung und/oder zum Nachweis mindestens einer chemischen und/oder biochemischen Substanz, weist einen Wellenleiter, welcher durch ein Substrat und darauf aufgebrachtes wellenleitendes Material gebildet wird, sowie eine Wellenleitergitterstruktur auf. Wellenleiter und Wellenleitergitterstruktur sind so ausgebildet, dass Lichtanteile ins Substrat und/oder in ein Covermedium abgestrahlt werden, wenn Licht von der Substratseite und/oder vom Covermedium her zumindest auf einen Teil der Wellenleitergitterstruktur einfällt, Die Wellenleitergitterstruktur umfasst mindestens eine Wellenleitergitterstruktureinheit, welche mindestens zwei ,sensing pads' aufweist.

Die mindestens zwei ,sensing pads' weisen je mindestens ein Gitter und je mindestens eine bio- und/oder chemoempfindliche Substanz auf und erfüllen zumindest eine der folgenden Bedingungen:

(a) die in den zwei ,sensing pads' geführten Lichtwellen unterscheiden sich in der Polarisation und/oder in der Modenzahl und/oder in der Wellenlänge

(b) die den zwei ,sensing pads' zugeordneten bio- und/oder chemoempfindlichen Substanzen zeigen unterschiedliche Spezifitäten oder die genau einem der ,sensing pads' zugeordnete bio- und/oder chemoempfindliche Substanz zeigt keine Spezifität.

Fig. 3

EP 1 443 320 A2

EP 1 443 320 A2

**Beschreibung**

Die Erfindung bezieht sich auf einen Sensorchip zur Charakterisierung einer chemischen und/oder biochemischen Substanz. Der Sensorchip ist mit einer Wellenleitergitterstruktur versehen.

Wellenleitergitterstrukturen mit und ohne chemoempfindlicher Schicht sind in der Literatur beschrieben (siehe z.B. EP 0 226 604 B1, EP 0 482 377 A2, PCT WO 95/03538, SPIE Vol. 1141, 192-200, PCT WO 97/09594, Advances in Biosensors 2 (1992), 261-289, USP 5'479'260, SPIE Vol. 2836, 221-234).

In EP 0 226 604 B1 und EP 0 482 377 A2 oder in Sensors and Actuators A 47, S. 482-486 wird gezeigt, wie die effektive Brechzahl (bzw. der Kopplungswinkel) eines chemosensitiven Gitterkopplers als Sensor-Signal gemessen werden kann. Das Sensor Signal "effektive Brechzahl" bzw. "Kopplungswinkel" ist eine Grösse, die eine starke Temperaturabhängigkeit aufweist.

Stirnseitiges Einkoppeln von Licht in einen Wellenleiter (siehe SPIE Vol. 1141, 192-200) ist unpraktisch, da eine hohe Positionierungsgenauigkeit erforderlich ist. Zudem muss die Stirnseite des Wellenleiters optische Qualität aufweisen. In WO 95/03538 wird gezeigt, wie der absolute Auskopplungswinkel eines Modes gemessen wird. Diese Grösse zeigt jedoch ohne Referenzierung eine starke Temperaturabhängigkeit. In WO 97/09594 werden chirped Wellenleitergitter vorgestellt, die jedoch ebenfalls eine Abhängigkeit von der Temperatur zeigen. In Sensors and Actuators B 38, S. 116-121 wird eine Messanordnung mit stirnseitiger Lichteinkopplung gezeigt, welche einen Signal- und einen Referenz- 'sensing pad' benutzt.

In Advances in Biosensors 2 (1992), 261-289 wird gezeigt, wie die Störung "Porendiffusion" mit dem Dreischichtwellenleitermodell wegreferenziert werden kann. Die Brechzahl des wellenleitenden Films zeigt Drift, während die Schichtdicke des wellenleitenden Films (=Sensor-Signal) stabil bleibt. Die Anordnung ist mit beweglicher Mechanik aufgebaut, was keine schnellen Messungen zulässt. Zudem wird das Sensor-Signal bzw. das aus der Wellenleitergitterstruktur austretende Licht stirnseitig erfasst. Stirnseitige Detektion ist für eine zweidimensionale Anordnung von Wellenleitergitterstruktureinheiten ungeeignet. Weiters werden die effektiven Brechzahlen N(TE) und N(TM) für die beiden Polarisationen TE und TM nicht gleichzeitig erfasst, da für die Erfassung der winkelmässig voneinander getrennten Resonanzeinkopplungskurven ein mechanischer Winkelscan durchgeführt wird.

In US 5'479'260 wird ein bidiffraktiver bzw. multidiffraktiver Gitterkoppler beschrieben, wobei das Sensor-Signal durch Interferometrie zweier ausgekoppelter Strahlen gleicher oder unterschiedlicher Polarisation (unter Verwendung eines Polarisators) zustandekommt. Interferometrische Messungen sind kompliziert, da die Intensitäten der beiden Strahlen aufeinander abgestimmt werden müssen. Zudem werden Temperaturschwankungen durch das durch unterschiedliche Polarisationen (unter Verwendung eines Polarisators) generierte interferometrische Signal nur teilweise kompensiert.

In SPIE Vol. 2836, 221-234 wird eine Anordnung für eine Wellenleitergitterstruktur in Zusammenhang mit Fluoreszenz- bzw. Lumineszenzmessungen beschrieben. Diese Anordnung eignet sich jedoch nicht für eine (gegebenenfalls gleichzeitige) (absolute) temperaturkompensierte Messung auf der Basis eines Direktnachweises. Zudem ist die Wellenleitergitterstruktur auf einem Drehtisch montiert.

In Applied Optics 20 (1981), 2280-2283 wird über einen temperaturunabhängigen optischen Wellenleiter berichtet, wobei das Substrat aus Silizium ist. Silizium ist im sichtbaren Spektralbereich absorbierend. Bei chemosensitiven Wellenleitergitterstrukturen wird Licht jedoch bevorzugt von der Substratseite her eingekoppelt. In Applied Optics 20 (1981), 2280-2283 werden zudem nicht temperaturunabhängige Gitterkoppler behandelt.

Die vorliegende Erfindung hat die Aufgabe, einen Sensorchip für einen (bio)chemoempfindliche optischen Sensor zu schaffen und ein optisches Verfahren zur Charakterisierung einer (bio)chemischen Substanz anzugeben, welche die obigen Nachteile nicht aufweisen. Insbesondere sollen mit der Erfindung:

(1) Sensor-Signale, welche eine geringe Temperaturabhängigkeit und/oder eine geringe Abhängigkeit von der Diffusion der Probenflüssigkeit in die Mikroporen eines wellenleitenden Films aufweisen, erzeugt werden können,
(2) sowohl die Messung von (absoluten) Sensor-Signalen bezüglich eines Direktnachweises (absolute Auskopplungswinkel $\alpha(TE)$ und $\alpha(TM)$ für die TE- bzw. TM-Welle, effektive Brechzahlen N(TE) und N(TM) für die TE- bzw. TM-Welle, Schichtdicke $t_F$ des wellenleitenden Films etc.) als auch die Messung von (absoluten) Sensor-Signalen bezüglich eines Markierungsnachweises (referenzierte Fluoreszenz-, Lumineszenz-, Phosphoreszenz-Signale etc.) möglich sein und
(3) Sensor-Signale bezüglich einer leichten Verkippung und/oder Verschiebung der Wellenleitergitterstruktur stabil bleiben, da (örtliche und winkelmässige) Differenzen von Sensor-Signalen bzw. referenzierte Sensorsignale gemessen werden.

Die Aufgabe wird gelöst durch die Erfindung, wie sie in den unabhängigen Patentansprüchen definiert ist.
Ein erfindungsgemässer Sensorchip zur Verwendung in einem optischen Sensor zur Charakterisierung und/oder zum Nachweis mindestens einer chemischen und/oder biochemischen Substanz, weist einen Wellenleiter, welcher durch ein Substrat und darauf aufgebrachtes wellenleitendes Material gebildet wird, sowie eine Wellenleitergitterstruktur auf, wobei Wellenleiter und Wellenleitergitterstruktur so ausgebildet sind, dass Lichtanteile ins Substrat und/oder in ein Covermedium abgestrahlt werden, wenn Licht von der Substratseite und/oder vom Covermedium her zumindest auf einen Teil der Wellenleitergitterstruktur einfällt. Die Wellenleitergitterstruktur umfasst mindestens eine Wellenleitergitterstruktureinheit umfasst mit mindestens zwei 'sensing pads', wobei die mindestens zwei 'sensing pads' je mindestens ein Gitter und je mindestens eine bio- und/oder chemoempfindliche Substanz aufweisen und eine der folgenden Bedingungen erfüllen:

(a) die in den zwei 'sensing pads' geführten Lichtwellen unterscheiden sich in der Polarisation und/oder in der Modenzahl und/oder in der Wellenlänge

(b) die den zwei 'sensing pads' zugeordneten bio- und/oder chemoempfindlichen Substanzen zeigen unterschiedliche Spezifitäten oder die genau einem der 'sensing pad' zugeordnete bio- und/oder chemoempfindliche Substanz zeigt keine Spezifität.

Die Wellenleitergitterstruktureinheiten, können eindimensional oder zweidimensional (z.B. matrixförmig oder kreisförmig) angeordnet sein.

Eine eventuelle xy-Verschiebung (oder nur x-Verschiebung) des Lesekopfs (der Leseköpfe) von einer Wellenleitergitterstruktureinheit zur anderen bzw. eine eventuelle xy-Verschiebung (oder nur x-Verschiebung) der Wellenleitergitterstruktur kann durchaus zur Anwendung kommen.

Ein 'sensing pad', in dem geführte Lichtwellen unterschiedlicher Polarisation (TE-Welle bzw. TM-Welle) angeregt werden, zählt als zwei 'sensing pads' (Unterschied in der Polarisation!), sofern das erzeugte Sensor-Signal nicht durch interferometrische Messung zustandekommt.

Ein 'sensing pad', in dem geführte Lichtwellen unterschiedlicher Modenzahl angeregt werden, zählt als zwei 'sensing pads' (Unterschied in der Modenzahl!).

Ein 'sensing pad', in dem geführte Lichtwellen unterschiedlicher Wellenlänge angeregt werden, zählt als zwei 'sensing pads' (Unterschied in der Wellenlänge!).

Erster und zweiter 'sensing pad' können auch als Signal- und Referenzpfad aufgefasst werden. Die beiden 'sensing pads' können (müssen aber nicht) die gleiche Struktur aufweisen.

Die (bio)chemoempfindliche Schicht kontaktiert den wellenleitenden Film in einer Kontaktzone. Diese Kontaktzone beinhaltet normalerweise beim Direktnachweis zumindest ein Gitter (Bei interferometrischen Messungen mit gleicher Polarisation kann für einen Direktnachweis die (bio)chemoempfindliche Schicht auch nur zwischen zwei Gittern liegen (siehe auch EP 0 226 604)) (Bei interferometrischen Messungen mit zwei unterschiedlichen Polarisationen (unter Verwendung eines Polarisators) kann die (bio)chemoempfindliche Schicht auch auf einem multidiffraktiven (bidiffraktiven) Gitter liegen (siehe USP 5'479'260)).

Grundsätzlich kann als mögliches referenziertes Sensor-Signal beispielsweise die Grösse S (Signalpfad) - cS(Referenzpfad) dienen, wobei S(Signalpfad) und S(Referenzpfad) die Sensor-Signale im ersten 'sensing pad' (Signalpfad) bzw. im zweiten 'sensing pad' (Referenzpfad) und c ein Kalibrierungsfaktor sind. Bei gleicher Polarisation ist vernünftigerweise c=1. Bei verschiedenen Polarisationen können mit c die unterschiedlichen Sensitivitäten der beiden Polarisationen berücksichtigt werden. Bei verschiedenen Wellenlängen bzw. Modenzahlen können mit c die unterschiedlichen Sensitivitäten der Wellenlängen bzw. der Modenzahlen berücksichtigt werden. Vorteilhafterweise liegen Signalpfad und Referenzpfad möglichst nahe zusammen.

Das referenzierte Sensor-Signal bei gleicher Polarisation hat weiters den Vorteil, dass Störungen $\delta$ wie z.B. solche verursacht durch Temperaturschwankung, Lichtwellenlängenschwankung, unerwünschte Diffusion von Molekülen in den Wellenleiter bzw. in die chemoempfindliche Schicht, unspezifische Bindungen, Schwankung der Konzentration in den nicht nachzuweisenden Molekülen etc. oder Kombinationen davon wegreferenziert werden können, d. h. das referenzierte Sensor-Signal ist unabhängig von $\delta$, da S(Signalpfad)+$\delta$ - (S(Referenzpfad)+$\delta$) = S(Signalpfad) -S(Referenzpfad) ist.

Vorzugsweise werden Monomode-Wellenleiter verwendet, welche nur den fundamentalen TE-Mode oder nur den fundamentalen TE-Mode und den fundamentalen TM-Mode tragen. Der wellenleitende Film soll vorzugsweise aus einem hochbrechenden Material bestehen, was die Erzeugung hoher Sensitivitäten garantiert. Es kann der wellenleitende Film mit einer chemoempfindlichen Schicht (z.B einer Antikörperschicht (z.B. geeignet für den Nachweis eines entsprechenden Antigens), einer Dextran-Schicht mit Erkennungsmolekül (z.B. Antikörper), Rezeptoren, DNA-Abschnitte, einer Silikon-Schicht zum Nachweis von Kohlenwasserstoffen, etc.) belegt sein. Es kann jedoch auch der wellenleitende Film selbst eine chemoempfindliche Schicht darstellen. Es können auch Streifenwellenleiter zum Einsatz kommen.

Ein 'sensing pad' umfasst zumindest ein Gitter, kann aber auch zumindest ein (eventuell stärker moduliertes) Einkopplungsgitter und zumindest ein Auskopplungsgitter umfassen. Die Gitterperioden der beiden 'sensing pads' können (müssen aber nicht) unterschiedlich sein. Die Gitterperioden von Einkopplungsgitter und Auskopplungsgitter können unterschiedlich sein (sind meistens unterschiedlich).

Einkopplungsgitter und Auskopplungsgitter können unidiffraktive oder multidiffraktive Gitterstrukturen (bidiffraktive Gitter, Gitter mit sich ändernder Gitterperiode und/oder mit sich änderndem Gitterbeugungsvektor, etc. ) sein.

Eine bevorzugte 'sensing pad' Anordnung besteht aus drei Gittern, wobei das mittlere Gitter das Einkopplungsgitter und die beiden äusseren Gitter zwei Auskopplunsgitter darstellen. Mit einem stark modulierten Einkopplungsgitter gelingt es zum Beispiel, mit einem einzigen (bzw. mit zwei) einfallenden (gegebenenfalls leicht fokussierten) Lichtstrahl(en), Moden in Vorwärts- und Rückwärtsrichtung anzuregen. Eine leichte Verschiebung des einfallenden Lichtstrahls in Modenausbreitungsrichtung oder eine leichte Verkippung der Wellenleitergitterstruktur bezüglich des einfallenden Lichtstrahls (in der Einfallsebene) ändern zwar die Intensität der (in Vorwärts- und/oder Rückwärtsrichtung laufenden) Moden infolge geänderter Kopplungsgeometrie, nicht aber den (die) Auskopplunswinkel bzw. die Differenz der Auskopplungswinkel (= doppelter absoluter Auskopplungswinkel), welche mögliche Sensor-Signale darstellen.

Figur 1 zeigt obige bevorzugte 'sensing pad'-Anordnung sowohl für den TE-Mode als auch für den TM-Mode, wobei die beiden 'sensing pads' nebeneinander liegen.

Figur 2 zeigt weitere Wellenleitergitterstruktureinheiten.

Figur 3 zeigt einen erfindungsgemässen optischen Sensor.

Eine weitere bevorzugte 'sensing pad' Anordnung besteht aus ebenfalls drei Gittern, wobei die beiden äusseren Gitter (eventuell stärker modulierte) Einkopplungsgitter und das mittlere Gitter das Auskopplungsgitter bilden.

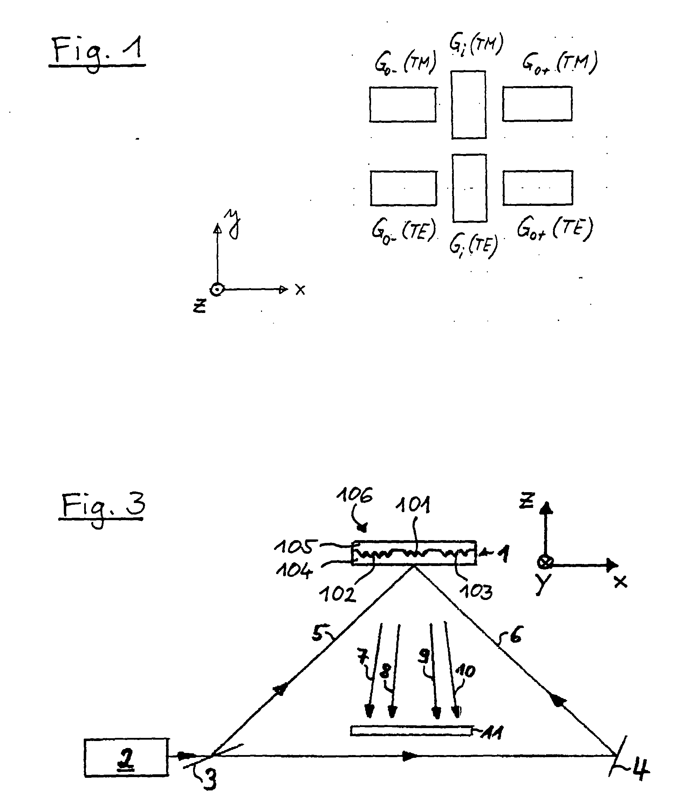

Bei der Detektion von (bio)molekularen Interaktionen mit der Anordnung gemäss Figur 1 (oder äquivalenten Anordnungen) wird die Wellenleiterstruktureinheit mit einer (bio)chemoempfindlichen Schicht belegt, an die dann im Experiment ein spezifischer Bindungspartner bindet, was zu einer Aenderung der Auskopplungswinkel $\alpha$(TE) = ($\alpha$(TE+) - $\alpha$(TE-))/2 und $\alpha$(TM) = ($\alpha$(TM+) - $\alpha$(TM-))/2 (Notation: z.B.$\alpha$(TE+): Auskopplungswinkel des in +x-Richtung laufenden TE-Modes) bzw. zu einer Aenderung der effektiven Brechzahlen N(TE) und N(TM) und der daraus ableitbaren integriert optischen Grössen - wie z.B. der Schichtdicke $t_F$ des wellenleitenden Films im Dreischichtwellenleitermodell (siehe weiter unten) - führt. Verschiedene Wellenleitergitterstruktureinheiten können mit verschiedenen chemoempfindlichen Schichten belegt werden.

Die Auskopplungswinkel der beiden Auskopplungsgitter (bzw. des Auskopplungsgitters) der bevorzugten 'sensing pad' Anordnung erlauben eine Absolutbestimmung des Auskopplungswinkels (bzw. der effektiven Brechzahl), obwohl die Auskopplung der beiden Lichtstrahlen nicht an ein und demselben Ort geschieht.

Bei zwei benachbarten 'sensing pads' für den TE- und den TM-Mode gemäss bevorzugter 'sensing pad' Anordnung (siehe Figur 1) erfolgt die Auskopplung sogar an vier verschiedenen Stellen.

Der 'sensing pad' für den TE-Mode erlaubt die Bestimmung der effektiven Brechzahl N(TE) des TE-Modes. Der 'sensing pad' für den TM-Mode erlaubt die Bestimmung der effektiven Brechzahl N(TM) des TM-Modes. Bei gleichzeitiger Beleuchtung der beiden 'sensing pads' (mit z.B. einem einzigen Lichtfeld mit 45° linear polarisiertem Licht oder zirkular (oder elliptisch) polarisiertem Licht) kann die Bestimmung des Auskopplungswinkels (der effektiven Brechzahl) für den TE- und TM-Mode gleichzeitig erfolgen.

Figur 1 zeigt eine vorteilhafte Ausführungsform einer Wellenleitergitterstruktureinheit. Der 'sensing pad' für den TE-Mode besteht aus dem Einkopplungsgitter $G_i$(TE) und den beiden links und rechts vom Einkopplungsgitter gelegenen Auskopplungsgittern $G_{o+}$(TE) und $G_{o-}$(TE). Der 'sensing pad' für den TM-Mode besteht aus dem Einkopplungsgitter $G_i$(TM) und den beiden links und rechts vom Einkopplungsgitter gelegenen Auskopplungsgittern $G_{o+}$(TM) und $G_{o-}$(TM) und liegt neben dem 'sensing pad' für den TE-Mode. Um den Einfluss von Störungen (z.B. Temperaturschwankungen) gering zu halten, sollten die beiden 'sensing pads' möglichst nahe nebeneinander liegen. Die Gitterstriche sind parallel zur y-Achse ausgerichtet.

Es ist vorteilhaft, wenn die Auskopplungsgitter $G_{o+}$(TE), $G_{o-}$(TE), $G_{o+}$(TM), $G_{o-}$(TM) von den geführten Lichtwellen vollständig beleuchtet werden, wodurch gewährleistet ist, dass beim jeweiligen Auskopplungsgitter die Sensorfläche mit der Fläche des Auskopplungsgitters übereinstimmt. Dies wird dadurch erreicht, indem (a) die Breite des Auskopplungsgitters in y-Richtung kleiner/gleich als die Breite des Einkopplungsgitters in y-Richtung gewählt wird und (b) der Beleuchtungsfleck auf dem Einkopplungsgitter eine y-Breite aufweist, die grösser/gleich als die y-Breite der Auskopplungsgitter ist, und der Beleuchtungsfleck die gesamte y-Breite eines Auskopplungsgitters einschliesst.

Eine vorteilhafte Ausführungsform ist jene, bei der die beiden Einkopplungsgitter $G_i$(TE) und $G_i$(TM) mit einem (oder zwei) (keilförmigen) unter 45° linear polarisierten Lichtfeld(ern) simultan beleuchtet werden. Damit können gleichzeitig der TE-Mode und der TM-Mode (in Vorwärts- und Rückwärtsrichtung) angeregt werden und es können auch gleichzeitig alle (im vorliegenden Fall: vier) Auskopplungswinkel gemessen werden. $G_i$(TE) und $G_i$(TM) weisen vorzugsweise unterschiedliche Gitterperioden auf.

Es ist jedoch auch möglich, dass ein 'sensing pad' für sich die Funktion eines 'sensing pads' für den TE-Mode und die Funktion eines 'sensing pads' für den TM-Mode ausübt. Der zweite (daneben liegende) 'sensing pad' ist dann entweder nicht vorhanden oder wird als Kontrolle bzw. Referenz verwendet (Dieser Referenz-'sensing pad' kann z.B. mit einer zweiten chemoempfindlichen Schicht oder einer nichtspezifischen Schicht, d.h. einer Schicht, die keine Spezifität (mit oder ohne 'non-specific binding') aufweist, belegt sein). Wird das Einkopplungsgitter eines 'sensing pads' unter den entsprechenden Einkopplungswinkeln mit TE-Licht als auch mit TM-Licht (z.B. mit 45° linear polarisiertem Licht) beleuchtet, so werden in dem einen 'sensing pad' sowohl der TE-Mode als auch der TM-Mode (gegebenenfalls sowohl in Vorwärts- als auch in Rückwärtsrichtung) angeregt.

Es ist auch möglich, den TE-Mode nur in Vorwärtsrichtung und den TM-Mode nur in Rückwärtsrichtung (oder umgekehrt) oder den TE-Mode und den TM-Mode nur in Vorwärtsrichtung (oder umgekehrt) anzuregen. Es werden dann die entsprechenden zwei Auskopplungswinkel bzw. deren Differenz gemessen.

Als Detektoren werden vorteilhafterweise 1- oder 2-dimensionale (digitale oder analoge) positionssensitive Detektoren (PSD), Photodiodenarrays, CCD Zeilen- oder Flächenkamera(s) etc. eingesetzt. Die ausgekoppelten Lichtstrahlen werden vorteilhaftweise mit einer Linse fokussiert, wobei der Fokus sich nicht unbedingt exakt auf der Detektorfläche befinden muss. Die Auskopplungsgitter können auch fokussierende Gitter sein. Dies hat den Vorteil, dass die Linsenwirkung bereits in das Auskopplungsgitter integriert ist.

Es ist auch möglich, die Richtung der Gitterstriche des Auskopplungsgitters derart zu wählen, dass die Gitterstriche nicht senkrecht zur Ausbreitungsrichtung des Modes stehen. Vorteilhafterweise hat die Verkippung der Gitterstriche (bzw. der Gitterbeugungsvektoren) der Auskopplungsgitter zweier benachbarter 'sensing pads' umgekehrtes Vorzeichen. Damit kann eine bessere Separation der ausgekoppelten Lichtwellen erreicht werden.

Das Einkopplungsgitter kann auch derart gewählt werden, dass die Gitterperiode in x-Richtung oder y-Richtung oder x- und y-Richtung nicht konstant bleibt bzw. verlaufend ist. Die Anforderungen an die Genauigkeit der Einstellung des Einfallswinkels werden dadurch relaxiert.

Die in Figur 1 gezeichneten Einkopplungsgitter weisen vorteilhafterweise eine starke Modulation auf und zeichnen sich durch eine kurze Breite in x-Richtung aus. Dadurch werden die Anforderungen an die Genauigkeit der Einstellung des Einfallswinkels relaxiert, da nun Licht aus einem grösseren Winkelsegment einkoppeln kann.

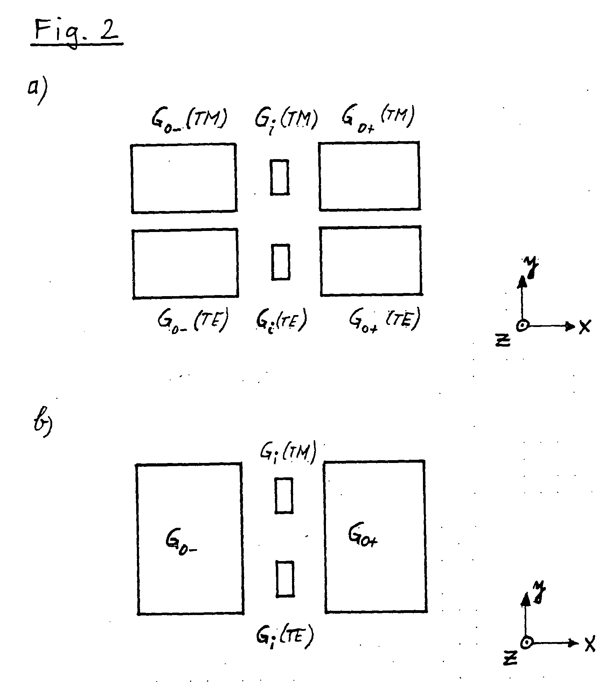

Figuren 2a) und 2b) zeigen zwei weitere Anordnungen von Wellenleitergitterstrukturen, wobei hier die Ausdehnung der Einkopplungsgitter in y-Richtung kleiner ist als jene der Auskopplungsgitter. In Figur 2b) sind ein einheitliches Auskopplungsgitter $G_{o-}$ für die in (-x)-Richtung laufende TE- und TM-Welle und ein einheitliches Auskopplungsgitter $G_{o+}$ für die in (+x)-Richtung laufende TE- und TM-Welle gezeichnet.

Figur 3 zeigt eine Ausführungsform eines erfindungsgemässen Sensors. Der Sensor beinhaltet einen Wellenleiter 1 mit einem Substrat 104, einem wellenleitenden Material 105 und einem Covermedium 106 sowie mit einer Wellenleitergitterstruktur gemäss Fig. 1. Eine Lichtquelle 2 erzeugt bspw. 45° linear polarisiertes Licht; zu diesem Zweck kann ein linear polarisierter Laser mit zur Zeichenebene um 45° verkippter Polarisationsebene verwendet werden. Über einen Strahlteiler 3 bzw. einen Spiegel 4 werden zwei einfallende Lichtstrahlen 5, 6 erzeugt. Die Lichtstrahlen 5, 6 fallen durch das Substrat 104 auf die beiden Einkopplungsgitter 101 (von denen in der Seitenansicht von Fig. 3 nur eines sichtbar ist) der zwei 'sensing pads' (vgl. Fig. 1) und erzeugen im ersten 'sensing pad' eine TE-Welle in Vorwärts- und Rückwärtsrichtung und im zweiten 'sensing pad' eine TM-Welle in Vorwärts- und Rückwärtsrichtung. Die Lichtwellen werden über vier Auskopplungsgitter 102, 103 (von denen in der Seitenansicht von Fig. 3 nur zwei sichtbar sind) aus der Wellenleitergitterstruktur ausgekoppelt und ins Substrat 104 abgestrahlt. Nach dem Durchlaufen des Substrates 104 breiten sie sich als Lichtfelder 7-10 aus und fallen auf einen zweidimensionalen CCD-Detektor 11. Gegebenenfalls kann sich zwischen dem Wellenleiter 1 und dem Detektor 11 ein (nicht dargestelltes) Linsensystem befinden.

Wird in den beiden 'sensing pads' mit unterschiedlicher Polarisation und einer der Wellenleitergitterstruktureinheit zugeordneten chemoempfindlichen Schicht gearbeitet, so kann beispielsweise das Sensor-Signal $S = t_F$ (=Schichtdicke des wellenleitenden Films im Dreischichtwellenleitermodell) generiert werden (siehe auch weiter unten). Wird nun eine zweite Wellenleitergitterstruktureinheit, die ebenfalls die Generierung des Sensor-Signals $S = t_F$ zulässt, neben die erste Wellenleitergitterstruktureinheit (nun gesamtheitlich als Signalpfad aufzufassen) gelegt und die zweite Wellenleitergitterstruktureinheit (nun gesamtheitlich als Referenzpfad aufzufassen) beispielsweise mit einer chemoempfindlichen Schicht unterschiedlicher Spezifität bzw. mit einer nichtspezifischen chemoempfindlichen Schicht mit oder ohne 'non-specific binding' (z.B. einer Dextran-Schicht, an die kein Erkennungsmolekül gebunden ist) belegt, so kann beispielsweise als Sensor-Signal die Grösse $t_F$(gemessen im Signalpfad) - $t_F$(gemessen im Referenzpfad) dienen.

Obwohl die effektiven Brechzahlen N(TE) und N(TM) des TE- bzw. TM-Modes eventuell nicht am gleichen Ort gemessen werden (die beiden 'sensing pads' sind jedoch im Fall eines chemoempfindlichen Sensors mit derselben chemoempfindlichen Schicht bedeckt), können mit der Wellenleitergitterstruktureinheit die interessanten Sensor-Signale S und/oder ΔS mit

$$\Delta S = \Delta\alpha(TM) - \Delta\alpha(TE) = \Delta(\alpha(TM) - \alpha(TE)) \ (\Delta S = \Delta(\alpha(TE) - \alpha(TM)))$$

($\alpha$=Auskopplungswinkel)

$$\Delta S = \Delta N(TM) - \Delta N(TE) \ (\Delta S = \Delta N(TE) - \Delta N(TM)),$$

wobei die Schichtdicke des wellenleitenden Films vorzugsweise derart gewählt sein soll, dass für die Sensitivität der Brechzahl des Covermediums $\partial N(TE)/\partial n_C = \partial N(TM)/\partial n_C$ gilt, was zumindest den Einfluss von durch Temperaturänderungen hervorgerufenen Brechzahländerungen des Cover-Mediums auf das Sensor-Signal eliminiert (die Brechzahl $n_C$ des Cover-Mediums hängt von der Temperatur ab, d.h. $n_C = n_C(T)$, wobei T die Temperatur ist),

$$\Delta S = \Delta t_F = const \ ((\partial N(TE)/\partial T)^{-1}\Delta N(TE) - (\partial N(TM)/\partial T)^{-1}\Delta N(TM))$$

wobei const $= ((\partial N(TE)/\partial T)^{-1}(\partial N(TE)/\partial t_F) - (\partial N(TM)/\partial T)^{-1}(\partial N(TM)/\partial t_F))^{-1}$ und die Aenderung der Schichtdicke $\Delta t_F$ aus dem Gleichungssystem

$$\Delta N(TE) = (\partial N(TE)/\partial t_F)\Delta t_F + (\partial N(TE)/\partial T)\Delta T \tag{1}$$

$$\Delta N(TM) = (\partial N(TM) /\partial t_F)\Delta t_F + (\partial N(TM)/\partial T)\Delta T$$

berechnet wird und $\partial N/\partial T$ der Temperaturkoeffizient des Wellenleiters samt Cover (=Probe) für den entsprechenden Mode ist ($\partial N/\partial T$ wird unter Berücksichtigung des Temperaturkoeffizienten $(dN/dT)_{GRATING}$ des Gitters experimentell (oder nach Theorie) bestimmt (siehe auch weiter unten)),
$\Delta S = \Delta t_F$ , wobei die Schichtdicke $t_F$ mit dem Drei-Schicht-Wellenleitermodell (mit N(TE) und/oder N(TM) als Input-Parameter) berechnet wird,
$\Delta S = \Delta t_A$ , wobei die Aenderung der Zusatzschichdicke $\Delta t_A$ aus dem Gleichungssytem

$$\Delta N(TE) = (\partial N(TE)/\partial t_A)\Delta t_A + (\partial N(TE)/\partial T)\Delta T \tag{2}$$

$$\Delta N(TM) = (\partial N(TM)/\partial t_A)\Delta t_A + (\partial N(TM)/\partial T)\Delta T$$

berechnet wird,
$\Delta S = \Delta t_A$ , wobei die Zusatzschichtdicke $t_A$ mit dem Vier-Schicht-Wellenleitermodell (bzw. Fünf-Schicht-Wellenleitermodell) berechnet wird,
$\Delta S = \Delta\Gamma$, wobei die Massenbelegung $\Gamma$ (siehe Chem. Commun. 1997, 1683-1684) mit dem Vier-Schicht-Wellenleitermodell (oder auch mit dem Drei-Schicht-Wellenleitermodell unter Verwendung von Approximationen (siehe J. Opt. Soc. Am. B, Vol. 6, No.2, 209-220)) berechnet wird,
etc. gemessen werden. Die obigen Sensor-Signale sind deshalb interessant, weil sie eine geringe Temperaturabhängigkeit aufweisen. Grundsätzlich ist jedoch bei der Messung noch zu berücksichtigen, dass auch die Gitterperiode eine Temperaturabhängigkeit infolge des thermischen Ausdehnungskoeffizienten des Sensor Chips aufweist. Es gilt $\Delta\Lambda = \alpha\Lambda\Delta T$, wobei $\Delta\Lambda$ die Aenderung der Gitterperiode $\Lambda$, $\Delta T$ die Aenderung der Temperatur T und $\alpha$ der thermische Ausdehnungskoeffizient (typisch $4.5 \ 10^{-6}$ K$^{-1}$ für Glas und $6.1 \ 10^{-5}$ K$^{-1}$ für Polykarbonat) sind. Das durch das Gitter verursachte $(dN/dT)_{GRATING} = 1(\lambda/\Lambda)\alpha$, wobei 1 die Beugungsordnung und $\lambda$ die Wellenlänge sind, trägt wie folgt zum Temperaturkoeffizienten $(dN/dT)_{CHIP}$ (=experimentelle Messgrösse) des kompletten Sensor Chips bei: $(dN/dT)_{CHIP} = (dN/dT)_{WAVEGUIDE + SAMPLE} + (dN/dT)_{GRATING}$, wobei $(dN/dT)_{WAVEGUIDE + SAMPLE}$ der Temperaturkoeffizient des Wellenleiters samt Cover (=Probe) ist.

Die Sensor-Signale S und $\Delta S$ können in Funktion der Zeit aufgenommen werden. Aber es kann auch nur ein Anfangs- und Endzustand auf einer Wellenleitergitterstruktureinheit gemessen und verglichen werden, wobei beispielsweise zwischendurch andere Wellenleitergitterstruktureinheiten ausgewertet werden können oder die Wellenleitergitterstruktur gar zwischendurch von der Messeinheit entfernt werden kann, da absolute Winkel bzw. Differenzen von Winkeln (bzw. Abstände (Differenzen von Abständen) von Lichtpunkten) gemessen werden und diese Grössen bezüglich einer Verkippung bzw. Verschiebung stabil bleiben. Die Bestimmung eines Messwerts kann durch eine Einzelmessung, aber auch durch statistische Auswertung (z.B. Mittelung) mehrerer Einzelmessungen erfolgen.

Falls neben Temperaturänderungen $\Delta T$ noch andere Störungen wie z.B. Diffusion von Probenflüssigkeit in die Mikroporen eines porösen wellenleitenden Films (was zu einer Brechzahländerung $\Delta n_F$ des wellenleitenden Films führt) oder Spannungen (wie z.B. Druckspannung oder Zugspannung) bzw. Spannungsänderungen vorhanden sind oder falls überhaupt nur Porendiffusion vorhanden ist, kann (im ersten Fall unter bestimmten Voraussetzungen (es ist z.B. der zeitliche Verlauf der Porendiffusion mit Temperatur T als Kurvenscharparameter bekannt)) (approximativ) eine (gemeinsame) Störungsgrösse $\xi$ mit $N(t_F,\xi) = N(t_F, n_F(\xi), n_S(\xi), n_C(\xi))$ bzw. $N(t_A, \xi) = N(t_F, t_A, n_A(\xi), n_F(\xi), n_S(\xi), n_C(\xi))$ eingeführt werden. Gleichung (1) bzw. (2) nimmt dann die Form

$$\Delta N(TE) = (\partial N(TE)/\partial S)\Delta S + (\partial N(TE)/\partial \xi)\Delta\xi \qquad (3)$$

$$\Delta N(TM) = (\partial N(TM)/\partial S)\Delta S + (\partial N(TM)/\partial \xi)\Delta\xi$$

an, wobei $\Delta S$ das Sensor-Signal $\Delta t_F$ (oder $\Delta t_A$) und, beispielsweise im Fall des Drei-Schicht-Wellenleitermodells $\partial N/\partial\xi = (\partial N/\partial n_F)(\partial n_F/\partial\xi) + (\partial N/\partial n_S)(\partial n_S/\partial\xi) + (\partial N/\partial n_C)(\partial n_C/\partial\xi) (+(\partial N/\partial t_F)(\partial t_F/\partial\xi))$, falls $t_F = t_F(\xi)$) ist. Logischerweise folgt unmittelbar aus $\xi = T$ Formel (1) bzw. Formel (2). $\xi = n_F$ beschreibt z.B. die Diffusion bei konstanter Temperatur.

Auch im Fall vom Vorliegen mehrerer Störungen kann mit dem Drei-Schicht-Wellenleitermodell gearbeitet werden und die Modengleichung gelöst werden (Beispiel: Input: N(TE), N(TM), Output: $t_F$, $n_F$ (=Brechzahl des wellenleitenden Films) oder $t_F$, $n_C$ (=Brechzahl des Covermediums) oder $t_F$, $n_S$ (=Brechzahl des Substrats)). Im Drei-Schicht-Wellenleitermodell werden wellenleitender Film, chemoempfindliche Schicht und spezifischer Bindungspartner als eine Schicht mit einer Brechzahl betrachtet. Obwohl $n_F$ und $n_C$ (und gegebenenfalls $n_S$) nicht exakt bekannt sind und sich gegebenenfalls während des Experiments aufgrund der Störung ändern, ist die Messgrösse $t_F$ relativ unabhängig von der Störung, hingegen abhängig vom Bindungsvorgang. Die Störung wird sozusagen in die zweite Outputgrösse, den Parameter "Brechzahl", verpackt.

Grundsätzlich sind Porendiffusion und Temperaturschwankungen unabhängige Erscheinungen und sollten durch zwei Störungsgrössen $\xi_1$ und $\xi_2$ beschrieben werden (Verallgemeinerung: k unabhängige Störungen werden durch k unabhängige Störungsgrössen $\xi_1,...,\xi_k$ beschrieben). Aus $N(t_F, \xi_1,...,\xi_k)$ folgt für beide Polarisationen, für eine gegebene Modenzahl und für eine gegebene Wellenlänge

$$\Delta N = (\partial N/\partial t_F)\Delta t_F + (\partial N/\partial\xi_1)\Delta\xi_1 + ... +(\partial N/\partial\xi_k)\Delta\xi_k \qquad (4)$$

Da die Störungsgrössen die Wellenleiterparameter $t_F$, $n_F$, $n_S$, $n_C$ beeinflussen können, gilt:

$$\partial N/\partial\xi_i = (\partial N/\partial t_F)(\partial t_F/\partial\xi_i) + (\partial N/\partial n_F)(\partial n_F/\partial\xi_i) + (\partial N/\partial n_S)(\partial n_S/\partial\xi_i) + \partial N/\partial n_C)(\partial n_C/\partial\xi_i) \qquad (5)$$

$(1<=i<=k)$ (Analoges gilt auch für $N(t_A, \xi_1,...,\xi_k)$). Für die Porendiffusion ($\xi_1=n_F$) und die Temperaturänderung ($\xi_2=T$) ergibt sich aus (4)

$$\Delta N = (\partial N/\partial t_F)\Delta t_F + (\partial N/\partial n_F)\Delta n_F + (\partial N/\partial T)\Delta T \qquad (6)$$

für beide Polarisationen, gegebener Modenzahl und gegebener Wellenlänge. $\partial N/\partial T$ kann z.B. experimentell bestimmt werden. Werden z.B beide Polarisationen gemessen, so stellt (6) zwei Gleichungen mit drei Unbekannten dar. Werden jedoch Messungen bei mehreren Wellenlängen (unter Berücksichtigung der Brechzahldispersionen) und/oder Modenzahlen durchgeführt, so können mehrere Gleichungssysteme bestehend jeweils aus drei Gleichungen und drei Unbekannten zusammengestellt und gelöst werden. Wird die Dispersion in $\Delta n_F(\lambda)$ als Unbekannte berücksichtigt ($\lambda$=Wellenlänge), so erhält man z.B. mit zwei Wellenlängen $\lambda_1$ und $\lambda_2$ und zwei Polarisationen vier Gleichungen mit vier Unbekannten $\Delta t_F$, $\Delta n_F(\lambda_1)$, $\Delta n_F(\lambda_2)$, $\Delta T$ und bestimmt daraus die Unbekannten. Die Grosse $\Delta t_F$ bildet das Sensor-Signal.

Analog zu weiter oben können aber auch das Sensor-Signal $t_F$ und die Störungsgrössen aus den (Dreischicht bzw. Vierschicht)Modengleichungen für die beiden Polarisationen und für mehrere Wellenlängen und Modenzahlen bestimmt werden, vorausgesetzt, dass das Gleichungssystem numerisch lösbar ist.

Grundsätzlich hängen auch die Schichtdicken in einem bestimmten Masse von der Temperatur ab (siehe auch Applied Optics 20 (1981), 2280-2283), was jedoch in den Formeln (1),(2) und (3) in der Approximation vernachlässigt wurde. Es ist jedoch auch möglich, bezüglich mindestens einer Probe eine derartige Kombination von (mehreren) Schichten und Substrat zu wählen, dass der Temperaturkoeffizient des Wellenleiters bzw. des Gitterkopplers (bzw.

der Wellenleitergitterstruktur) bezüglich mindestens eines Sensor-Signals S (=$\alpha$(TE), $\alpha$(TM), $\alpha$(TM) - $\alpha$(TE), N(TE),N (TM), N(TM) - N(TE), $t_F$, $t_A$ etc.) nahezu null ist (Die Sensitivität bleibt aber nach wie vor hoch). Dabei kann z.B. eine der involvierten Schichten eine $SiO_2$-Schicht sein.

Der absolute Temperaturkoeffizient bezüglich eines Sensor-Signals S ist dS/dT, der entsprechende relative Temperaturkoeffizient ist (1/S)(dS/dT). Mit dN(TE)/dT=0 bzw. dN(TM)/dT=0 werden auch S=N(TE) bzw. S=N(TM) zu interessanten temperaturunabhängigen Sensor-Signalen.

Ist in einem 'sensing pad' nur ein Gitter vorhanden, kann beispielsweise mit der in der Europäischen Patentanmeldung 0 482 377 A2 beschriebenen Reflexionsanordnung (eventuell mit einem Sensor Chip mit Verkippung der Gitterebene zur unteren Substratebene) gemessen werden. Die Messung mit der Reflexionsanordnung an schwach oder stärker modulierten (monodiffraktiven oder multidiffraktiven) Wellenleitergittern (homogene Gitter, überlagerte Gitter mit verschiedenen Gitterperioden und/oder Gitterorientierungen, chirped Gitter etc.) kann für TE- wie auch für TM-Wellen durchgeführt werden. Die Modenanregung kann von links, die Auslesung von rechts erfolgen oder auch umgekehrt. Beispielsweise kann in einem 'sensing pad' die Anregung der TE-Welle von links und die Anregung der TM-Welle von rechts erfolgen. In einem zweiten 'sensing pad' (eventuell mit unterschiedlicher Gitterperiode und/oder Gitterorientierung) kann die Anregung umgekehrt zum ersten 'sensing pad' erfolgen. Die Auslesung kann im reflektierten und transmittierten Lichtfeld in nullter oder höherer Beugungsordnung erfolgen. Damit ist es auch mit der Reflexionsanordnung möglich, absolute Kopplungswinkel zu bestimmen. Der gemessene absolute Kopplungswinkel, der im wesentlichen bei gleicher Gitterperiode (und gleicher Beugungsordnung) der halben Winkeldifferenz zwischen den beiden entsprechenden Resonanzminima entspricht, ändert nicht, auch wenn der Sensor Chip leicht verkippt wird. Aus den absoluten Kopplungswinkeln für die TE-Welle bzw. die TM-Welle können die entsprechenden effektiven Brechzahlen und weitere integriert optische Messgrössen wie z.B. die Schichtdicke $t_F$ des wellenleitenden Films im Dreischichtwellenleitermodell etc. bestimmt werden.

Es ist natürlich auch möglich, dass im ersten 'sensing pad' die Anregung der TE- und TM-Welle von links und die Auslesung von rechts (gegebenenfalls nur mit einem CCD) und im zweiten 'sensing pad' (eventuell mit unterschiedlicher Gitterperiode) Anregung und Auslesung umgekehrt erfolgt.

Es ist auch möglich, dass die Einfallsebene der Strahlführung verantwortlich für den Referenzpfad (zweiter 'sensing pad') gegenüber der Einfallsebene der Strahlführung verantwortlich für den Signalpfad (erster 'sensing pad') verdreht bzw. verkippt bzw. verdreht und verkippt ist. Erster und zweiter 'sensing pad' können auch zusammenfallen. Es können die Kopplungswinkel für die TE-Welle und die TM-Welle auch bei verschiedenen Wellenlängen und/oder Modenzahlen gemessen werden.

Eine weitere 'sensing pad' Anordnung besteht aus zwei (gleichen) chirped Gitter (Gitter mit verlaufender Gitterperiode), wobei ein Gitter als Einkopplungsgitter und ein Gitter als Auskopplungsgitter dient. Chirped Gitter sind aus der Literatur bekannt (siehe z.B. die Patentanmeldung WO 97/09594). Der Signal-'sensing pad' und der Referenz-'sensing-pad' können gleiche oder auch entgegengesetzte Chirp-Richtung (Richtung, in die die Gitterperiode sich ändert (z.B. grösser wird), ist senkrecht zur Richtung der Modenausbreitung) aufweisen. Die 'sensing pads' können mit derselben (bio)chemoempfindlichen Schicht belegt sein (siehe unten) oder unterschiedliche ((bio)chemoempfindliche) Schichten aufweisen, wobei die ((bio)chemoempfindliche) Schicht des zweiten 'sensing pads' (Referenz-'sensing pads') eine andere (bio)chemoempfindliche Schicht oder eine nichtspezifische ((bio)chemoempfindliche) Schicht mit oder ohne 'nonspecific binding' (z.B. Dextran ohne Erkennungsmolekül) oder eine reine Schutzschicht ist.

Das chirped Gitter, das für die Einkopplung zuständig ist, wird mit einem (nichtkeilförmigen oder gegebenenfalls (leicht) keilförmigen) Lichtband beleuchtet, wovon ein bestimmter Anteil, bei dem die Einkopplungsbedingung erfüllt ist, in den Wellenleiter eingekoppelt wird. Es können die Einkopplungs-chirped-Gitter von Signal-'sensing pad' und Referenz-'sensing pad' auch gleichzeitig (gegebenenfalls mit einem einzigen längeren Lichtband) (gegebenenfalls mit 45° linear polarisiertem oder zirkular (oder elliptisch) polarisiertem Licht (zur Anregung von Moden beider Polarisationen)) beleuchtet werden. Bei Anregung von Moden unterschiedlicher Polarisation unter einem festen Einfallswinkel sind die entsprechenden Gitterperioden der beiden 'sensing pads' verschieden.

Bei gleicher Polarisation und entgegengesetzter Chirp-Richtung von Signal-'sensing pad' und Referenz-'sensing pad' (beide 'sensing pads' sind mit derselben (bio)chemoempfindlichen Schicht belegt) wandern die beiden ausgekoppelten Lichtpunkte aufgrund der (bio)chemischen Bindung (praktisch) senkrecht zur Ausbreitungsrichtung der Moden aufeinander zu oder voneinander weg (je nach Chirp-Richtung bzw. Chirp-Orientierung). Die Position der Lichtpunkte wird mit PSDs oder (einem) 1-(oder 2) dimensionalen CCD gemessen. Ueber die Aenderung des Abstandes der beiden Lichtpunkte kann die Aenderung der effektiven Brechzahl der entsprechenden Polarisation berechnet werden. Der Abstand der beiden Lichtpunkte ist eine absolute Grösse, da der Abstand der beiden Lichtpunkte unabhängig von Verschiebungen bzw. von kleinen Verkippungen ist. (Haben Signalund Referenzpfad unterschiedliche Polarisation, kann das Mess-Signal $\Delta$N(TM) - $\Delta$N(TE) bestimmt werden).

Bei gleicher Polarisation, gleicher Chirp-Richtung der beiden 'sensing pads', aber unterschiedlicher (bio)chemoempfindlicher Schicht (z.B. auf Signalpfad: spezifische Schicht, auf Referenzpfad: nichtspezifische Schicht) bildet der Abstand der beiden Lichtpunkte ein referenziertes (absolutes) Sensor-Signal.

Die Anordnung vom vorletzten Absatz kann wiederum für die andere Polarisation (unter Anpassung der Gitterperiode) dupliziert werden und kann wiederum gesamtheitlich als Referenzpfad zur gesamten Anordnung des vorletzten Absatzes (jetzt als Signalpfad zu interpretieren) aufgefasst werden. Es kann hier die Aenderung der effektiven Brechzahl der anderen Polarisation gemessen werden. (Bleibt (bleiben) jedoch die Polarisation(en) gleich und kommt dafür eine andere chemoempfindliche Schicht (mit oder ohne nonspecific binding) oder eine nichtspezifische Schicht mit oder ohne non-specific binding (z:B. Dextran-Schicht ohne Erkennungsmolekül) zum Einsatz, so können die referenzierten Messgrössen (Messgrösse (erste Anordnung) - Messgrösse (zweite Anordnung)) von den Messgrössen $\Delta N$ (TE) oder $\Delta N(TM)$ oder $\Delta N(TM)$ - $\Delta N(TE)$ ermittelt werden).

Es ist auch möglich, dass nur das Einkopplungsgitter als chirped Gitter vorliegt, das Auskopplungsgitter jedoch z.B. monodiffraktiv (oder multidiffraktiv) ist. Die beiden Lichtflecke vom vorvorletzten Absatz wandern aufgrund der (bio)chemischen Bindung nicht mehr senkrecht zur Richtung der Modenausbreitung, da das Auskopplungsgitter auch in der Einfallsebene (vielleicht besser Ausfallsebene genannt) ablenkt (d.h. es ändert der Auskopplungswinkel).

Wird wiederum für Signal-'sensing pad' und Referenz-'sensing pad' mit je drei Gittern (ein Einkopplungsgitter und zwei Auskopplungsgitter oder zwei Einkopplungsgitter und ein Auskopplungsgitter) gearbeitet, wobei Moden in Vorwärts- und Rückwärtsrichtung angeregt werden, ist das Einkopplungsgitter ein chirped Gitter (mit gleicher oder umgekehrter Chirp-Orientierung zwischen den beiden 'sensing pads') und sind die Auskopplungsgitter z.B. monodiffraktiv (oder multidiffraktiv), so können Verschiebungen bzw.Verkippungen der x- und y-Achse (Orientierung der Achsen wie in Figur 1) identifiziert und aufgrund der Absolutmessung eliminiert werden. Für die chemoempfindliche(n) Schicht (en) gelten die gleichen Bemerkungen wie beim 'sensing pad', der aus zwei chirped Gitter besteht. Wird beispielsweise nur der (absolute) Auskopplungswinkel (und/oder daraus ableitbare Messgrössen) als Sensor-Signal betrachtet, so kann das chirped Einkopplungsgitter auch mit einem keilförmig einfallenden Lichtband beleuchtet werden. Auch hier kann obige Anordnung (Signal- u. Referenzpfad) dupliziert werden und als neuer Referenzpfad (mit oder ohne unterschiedlicher chemoempfindlicher Schicht oder mit nichtspezifischer Schicht) zur obigen Anordnung (jetzt gesamtheitlich als Signalpfad aufzufassen) aufgefasst werden.

Die Probenflüssigkeit(en) wird (werden) durch eine 'well' bzw. eine Matrix von 'wells', eine Durchflusszelle bzw. eine Matrix von Durchflusszellen, eine Kapillarküvette bzw. eine Matrix von Kapillarküvetten etc. in Kontakt mit dem Wellenleiter bzw. der (den) chemoempfindlichen Substanz(en) gebracht.

Zweidimensionale Anordnungen führen z.B. zu einer 'microplate' mit 96, 384, 1536 'wells' etc. (Aber auch andere zweidimensionale Formate (z.B. Scheiben) sind möglich). Aber auch die Herstellung einzelner Streifen (eindimensionale Anordnung) ist möglich. Die Streifen können z.B. auch in den Rahmen einer Microplate eingesetzt werden. Die 'wells' können als separate Probenzelle (bzw. Probenzellenplatte) auf die Sensorchip-Platte, welche die Wellenleitergitterstruktureinheiten enthält, aufgebracht werden. Es ist jedoch auch möglich, das Substrat selbst derart mit Vertiefungen zu versehen, dass diese Vertiefungen bereits die Funktion der 'wells' bzw. der Durchflussküvetten bzw. der Kapillarküvetten übernehmen. In den letzteren beiden Fällen muss die Sensorchip-Platte mit einer mit Bohrungen versehenen Deckplatte abgedeckt werden. Im ersten Fall kann die Sensorchip-Platte mit einer Deckplatte (ohne Bohrungen) abgedeckt werden, um z. B. Verdunstung zu vermeiden. Die Bohrungen diene der Zu- bzw. Abfuhr der Probe bzw. der Entlüftung. Vorteilhafterweise wird mit Kunststoffsubstraten und Spritzgusstechniken oder Hot-Embossing-Techniken gearbeitet. Aber auch Sol-Gel-Techniken, UV-Härtetechniken für organisch/anorganische Komposite, Glasprägetechniken (Hot-Embossing oder (Injection) Molding), Aetztechniken, Laserabtragung etc. bilden eine Alternative.

Die Gitterstrukturen können mit Prägetechniken (Heissprägung, Kaltprägung, UV-Härtung) oder Spritzgusstechnik in Kunststoff, Sol-Gel, Glas, UV-härtbaren organischen oder anorganische Materialien oder organisch/anorganischen Kompositen, Ormoceren oder Nanomeren, mit Laserabtragung gepaart mit Interferometrie, Holographie und/oder Phasenmaskentechnik, Photolithographie gepaart mit Nass- oder Trockenätzung, mit Photopolymerisation (siehe z.B. P. Coudray et al., Crit. Rev. Opt. Sci. Tech. (SPIE) CR68 (1997), 286-303) oder mit Gusstechniken (z:B in Sol-Gel) etc. hergestellt werden. Kunststoffspritzgusstechniken, wie sie bei der Herstellung von Compact Disc Scheiben (z.B. in Polykarbonat) eingesetzt werden, sind besonders geeignet. Die Gitterstruktur kann im (bzw. auf dem) Substrat oder in (bzw. auf) einer Schicht sein oder in Kombinationen davon vorliegen. Die Gitterstrukturen können Oberflächenreliefgitter (bzw. Interface-Reliefgitter) oder Brechzahlgitter (bzw. Volumengitter) oder Kombinationen davon sein. Der wellenleitende Film kann eine Sol-Gel-Schicht ($SiO_2$-$TiO_2$, $TiO_2$, (nichtporöses) hochbrechendes Bleisilikatglas etc.) , eine organisch/anorganische Kompositschicht, eine Polymerschicht, eine PVD-, eine CVD-, eine PE-CVD-, eine PI-CVD-Schicht, eine photopolymerisierbare hochbrechende Schicht (z.B. photopolymerisierbares $TiO_2$) etc. oder Kombinationen davon sein. Es ist auch möglich, dass eine Schicht (mit vorzugsweise niedriger Brechzahl, z.B. aus $SiO_2$ Sol Gel , $SiO_2$-$TiO_2$ Sol Gel (mit niedrigem $TiO_2$-Gehalt), Bleisilikatglas Sol Gel (mit niedrigem Bleigehalt), floatglasähnlichem Sol-Gel etc.) die Gitterstruktur enthält und eine zweite Schicht (z.B. aus $SiO_2$-$TiO_2$, $TiO_2$, $Ta_2O_5$, $HfO_2$, $ZrO_2$, $Nb_2O_5$, $Si_3N_4$, Bleisilikatglas etc.) den wellenleitenden Film bildet. Dadurch, dass der Erweichungspunkt von Bleisilikatglas deutlich unter dem Erweichungspunkt von Glas liegt, kann das Bleisilikatglas zum Schmelzen gebracht werden, ohne dabei das Glas zu beschädigen. Der Schmelzvorgang führt zu nahezu porenfreiem Bleisilikatglas. Haben Substrat und die Schicht(en) ähnliche thermische Ausdehnungskoeffizienten, kann die Bildung von Mikrorissen verhindert werden (Mikrorisse erhöhen die Dämpfungswerte der Moden). PVD- und CVD-Prozesse erlauben die Herstellung von sehr kompakten wellenleitenden Filmen.

Das Substrat kann aus Kunststoff (z.B. Polykarbonat, PMMA, Polystyrol etc.), Sol-Gel oder aus Glas (Floatglas, Objektträger, Natronkalkglas, Borosilikatglas, alkalifreies Glas, Quartz etc.) sein. Es kann aber auch das Gittermaterial als Substratmaterial verwendet werden (z.B. Ormocer, UV härtbares Material).

Die Probenzelle kann aus Vertiefungen (Löchern, Bohrungen), aber auch aus Durchflusszellen bestehen. Diese Durchflusszellen können auch derart konfiguriert sein, dass die Probenflüssigkeit mit der Nadel eines Pipettierungsroboters zugeführt werden kann. Es ist auch möglich, dass eine zweite Probenzelle bestehend aus Durchflussküvetten in eine erste Probenzelle mit Vertiefungen (Löchern) eingesetzt wird.

In das Substrat bzw. irgendwo auf der Sensorchip-Platte können Positionierungsmarken (Löcher, Vertiefungen, Stifte, Ueberhöhungen etc.) ein- bzw. aufgebracht sein. Diese Positionierungsmarken garantieren, dass der einfallende Lichtstrahl das (die) Einkopplungsgitter trifft. Die Identifizierung der Positionierungsmarke erfolgt über die Messeinheit.

Für die Separation der das Sensorsignal tragenden Lichtwelle von anderen Lichwellen (z.B. von der an der Unterseite des Substrats reflektierten Lichtwelle) ist es auch vorteilhaft, wenn der wellenleitende Film nicht planparallel zur Unterseite des Substrates ist. Diese Nichtplanparallelität kann unter anderem in Form von Keilen, Prismen, Zylinderprismen, sphärischen Linsen, Zylinderlinsen etc. vorliegen.

Mit der chemosensitiven Wellenleiterstruktur können nicht nur ein Direktnachweis sondern auch Markierungsnachweise durchgeführt werden. Die Verwendung eines 'refractive index labels' (z.B. ein Kunststoffkügelchen (z.B. Latex-Kügelchen), biochemische und biologische Fragmente etc.) kann bereits als Markierungsnachweis aufgefasst werden. Es lassen sich damit beispielsweise Sandwich-Assays oder Competition-Assays realisieren.

Als Lichtquelle wird vorteilhafterweise eine monochromatische Lichtquelle wie z.B ein (gepulster) Laser, eine (gepulste) Laserdiode, eine (gepulste) LED mit oder ohne Filter im (infra)roten bzw. blau-grünen bzw. ultravioletten Spektralbereich verwendet. Aber auch thermische Lichtquellen mit einem Filter können zur Anwendung kommen. Rot-blau-grüne bzw. ultraviolette Wellenlängen haben den Vorteil, dass (a) die Sensitivität für den Direktnachweis steigt und (b) mit derselben Lichtquelle neben 'direct sensing' auch Fluoreszenz-, Phosphoreszenz- und Lumineszenztests durchgeführt werden können, wobei die Anregung der Fluoreszenz, Phosphoreszenz oder Lumineszenz über die evaneszente Welle (in Form einer TE-Welle oder TM-Welle oder TE- und TM-Welle) geschieht. Das Fluoreszenz-, Phosphoreszenz- und Lumineszenzlicht kann als ebene oder auch als geführte Lichtwelle beobachtet werden. Das durch die TE-Anregungswelle verursachte Fluoreszenzlicht (bzw. dessen Intensität) kann mit dem durch die TM-Anregungswelle verursachten Fluoreszenzlicht (bzw. dessen Intensität) referenziert bzw. verglichen werden, wobei vorteilhafterweise die Intensität der Anregungswelle mitberücksichtigt wird und eventuell die Detektoren durch den Einsatz von Polarisatoren polarisationsempfindlich gemacht werden. Die geführte Fluoreszenz-, Phosphoreszenz- und Lumineszenzlichtwelle kann über ein Gitter ausgekoppelt und einem Detektor zugeführt werden. Es können Sandwich-Assays, Competition-Assays etc. durchgeführt werden, wobei zumindest ein beteiligter Bindungspartner fluoreszenz (phosphoreszenz, lumineszenz)-markiert ist. Die (bio)chemosensitive Schicht kann auf dem Gitter, kann aber auch nur zwischen den Gittern bzw. ausserhalb des Gitters vorhanden sein.

Fluoreszenz-, Lumineszenz- und Phosphoreszenzmessungen zeigen eine geringe Temperaturabhängigkeit. Für Fluoreszenz-, Lumineszenz- und Phosphoreszenzmessungen sind rein anorganische Wellenleitergitterstrukturen besonders geeignet (Gitter wird in Glas oder Sol-Gel (z.B. $SiO_2$) oder im anorganischen wellenleitenden Film, wellenleitender Film aus anorganischem Material (z.B. $Si_3N_4$ oder Oxidschichten wie z.B. $TiO_2$ oder $Ta_2O_5$ oder Bleisilikat-schichten etc.) hergestellt). Anorganische Materialien zeigen z.B. eine geringe Eigenfluoreszenz. Wird mit einem Kunststoffsubstrat gearbeitet, so empfiehlt es sich, eine anorganische tiefbrechende Zwischenschicht (z.B. $SiO_2$) auf das Kunststoffsubstrat aufzubringen. Die Schichtdicke dieser Zwischenschicht ist so gross zu wählen, dass die darin laufende evaneszente Welle das Kunststoffsubstrat praktisch nicht mehr "sieht". Dadurch wird zumindest die durch die geführte Lichtwelle erzeugte Eigenfluoreszenz stark reduziert.

Werden die Intensität der (eventuell ausgekoppelten) Anregungswelle als auch jene der (eventuell ausgekoppelten) Emissionswelle gemessen, so können verschiedene Störfaktoren (wie z.B. solche, die durch Intensitätsschwankungen der Anregungswelle verursacht werden) durch Referenzierung eliminiert werden. Das referenzierte Sensor-Signal ist dann beispielsweise die Intensität der Fluoreszenz (Lumineszenz, Phosphoreszenz) geteilt durch die Intensität der Anregungslichtwelle. Die Intensität der Anregungswelle kann vor dem Eindringen der Anregungswelle in die chemoempfindliche Schicht oder nach dem Austritt der Anregungswelle aus der chemoempfindlichen Schicht oder an beiden Stellen gemessen werden. Mit referenzierten Markierungsnachweisen können absolute kinetische Messungen als auch absolute Endpunktsmessungen durchgeführt werden. Bei absoluten (Endpunkts)Messungen kann die (bio)chemische Interaktion auf der Wellenleitergitterstruktur auch ausserhalb des Messinstruments erfolgen.

Zu beachten ist auch, dass mit einem (digitalen oder analogen) PSD (position sensitive detector) (1-dimensional oder 2-dimensional), einem Photodiodenarray (PDA) (1-dimensional oder 2-dimensional) oder einem CCD-Array (1-dimensional oder 2-dimensional) nicht nur (Positionen von) Lichtfeldverteilungen sondern auch Intensitäten gemessen werden können.

Es können (müssen aber nicht) zum Teil mit denselben Detektoren ein Direktnachweis wie auch ein Markierungsnachweis (auf Fluoreszenz-, Lumineszenz-, Phosphoreszenzbasis) durchgeführt werden. Evaneszenzfeldanregung kann auch mit zeitaufgelösten Messtechniken (z.B. Time resolved fluorescence oder luminescence) kombiniert werden. Bei zeitaufgelösten Messtechniken wird mit einer gepulsten Lichtwelle (vorwiegend im sichtbaren bzw. ultravioletten Wellenlängenbereich) die Markierung angeregt. Die Abklingzeiten für die Fluoreszenz (Lumineszenz, Phosphoreszenz) von freien und gebundenen Markierungsmolekülen (mit oder ohne Energie-Transfer zwischen zwei verschiedenen Fluoreszenzmolekülen (siehe z.B. Förster-Theorie in CIS Bio International, November 1995, Number 3)) ist unterschiedlich. Die Eindringtiefe der geführten Anregungswelle in die Probe legt das "Beobachtungsvolumen" fest.

Interessant ist es, dass mit den vorliegenden Wellenleitergitterstrukturen Absolutmessungen sowohl markierungsfrei als auch fluoreszenz (phosphoreszenz, lumineszenz)-markiert (gegebenenfalls auch gleichzeitig) durchgeführt werden können. In beiden Fällen kann für die Lichteinkopplung auf eine bewegliche Mechanik verzichtet werden. Natürlich können auch (kontinuierliche) kinetische Messungen bzw. Echtzeitmessungen auf nicht absoluter Basis durchgeführt werden.

Mit einem 'sensing pad' (Signalpfad) (mit oder ohne chemoempfindlicher Schicht) können auch Lichtabsorptionsmessungen durchgeführt werden, indem die Intensitäten der (über Gitter, Prisma, Taper oder Stirnseite) ausgekoppelten Lichtstrahlen (gegebenenfalls mit denselben Detektoren) eventuell auch bei verschiedenen Wellenlängen gemessen werden. Die Lichtabsorptionsänderung kann direkt oder indirekt (z.B. durch Enzyme) durch die (bio)chemische Interaktion der Probe mit der chemoempfindlichen Schicht oder durch die Probe selbst oder durch die in der Probe ablaufenden Reaktionen (mit oder ohne zusätzlichem Reaktionspartner) zustandekommen. Die chemoempfindliche Schicht kann auf dem Gitter, zwischen den Gittern bzw. ausserhalb des Gitters vorhanden sein. Lichtintensitätsschwankungen der Lichtquelle können durch Referenzierung (z.B. mit einem Strahlteiler und einem Referenzdetektor oder über eine nicht eingekoppelte Beugungsordnung und einem Referenzdetektor) eliminiert werden. Referenzierung kann auch dadurch erfolgen, dass der zweite 'sensing pad' (Referenzpfad) mit einer Schutzschicht bedeckt ist und deshalb nicht mit der Probe interagieren kann. Das referenzierte Sensorsignal ist dann die Intensität des Signalpfaddetektors geteilt durch die Intensität des Referenzpfaddetektors.

Die Schutzschicht kann jedoch auch eine (poröse) (chemoempfindliche) Schicht sein, die keine Spezifität (mit oder ohne 'non-specific binding') oder Spezifität für einen anderen Liganden aufweist.

Referenzierung kann auch (muss aber nicht) über eine Hälfte eines 'sensing pads' erfolgen (z.B. Signal-Pfad: Mode in Vorwärtsrichtung, Referenz-Pfad: Mode in Rückwärtsrichtung).

## Patentansprüche

**1.** Sensorchip zur Verwendung in einem optischen Sensor zur Charakterisierung und/oder zum Nachweis mindestens einer chemischen und/oder biochemischen Substanz, aufweisend einen Wellenleiter, welcher durch ein Substrat und darauf aufgebrachtes wellenleitendes Material gebildet wird, sowie eine Wellenleitergitterstruktur, wobei Wellenleiter und Wellenleitergitterstruktur so ausgebildet sind, dass Lichtanteile ins Substrat und/oder in ein Covermedium abgestrahlt werden, wenn Licht von der Substratseite und/oder vom Covermedium her zumindest auf einen Teil der Wellenleitergitterstruktur einfällt,
**dadurch gekennzeichnet,**
**dass** die Wellenleitergitterstruktur mindestens eine Wellenleitergitterstruktureinheit umfasst,
**dass** eine Wellenleitergitterstruktureinheit mindestens zwei 'sensing pads' aufweist, wobei die mindestens zwei 'sensing pads' je mindestens ein unidiffraktives oder multidiffraktives Gitter und je mindestens eine biound/oder chemoempfindliche Substanz aufweisen und zumindest eine der folgenden Bedingungen erfüllen:

(a) die in den zwei 'sensing pads' geführten Lichtwellen unterscheiden sich in der Polarisation und/oder in der Modenzahl und/oder in der Wellenlänge

(b) die den zwei 'sensing pads' zugeordneten bio- und/oder chemoempfindlichen Substanzen zeigen unterschiedliche Spezifitäten oder die genau einem der 'sensing pads' zugeordnete bio- und/oder chemoempfindliche Substanz zeigt keine Spezifität.

**2.** Sensorchip nach Anspruch 1, **dadurch gekennzeichnet, dass** er so ausgebildet ist, dass Licht von der Substratseite her sowohl in den ersten als auch in den zweiten 'sensing pad' einer Wellenleitergitterstruktureinheit einstrahlbar ist oder Licht von der Covermediumseite her sowohl auf den ersten als auch auf den zweiten 'sensing pad' einer Wellenleitergitterstruktureinheit einstrahlbar ist, und dass bei Lichteinfall in die 'sensing pads' Licht sowohl vom ersten als auch vom zweiten 'sensing pad' in das Substrat abgestrahlt wird und/oder Licht sowohl vom ersten als auch vom zweiten 'sensing pad' in das Covermedium abgestrahlt wird.

3.  Sensorchip nach einem der vorangehenden Ansprüche, **dadurch gekennzeichnet, dass** ein 'sensing pad' zumindest ein Einkopplungsgitter und zumindest ein Auskopplungsgitter aufweist.

4.  Sensorchip nach Anspruch 3, **dadurch gekennzeichnet, dass** die Gitterperioden von Einkopplungsgitter und Auskopplungsgitter unterschiedlich sind.

5.  Sensorchip nach einem der vorangehenden Ansprüche, **dadurch gekennzeichnet, dass** die Gitter der zwei 'sensing pads' keine verlaufende Gitterperiode aufweisen.

6.  Sensorchip nach einem der vorangehenden Ansprüche, **dadurch gekennzeichnet, dass** die Gitterstriche eines Gitters einer Wellenleitergitterstruktureinheit eine Ebene mit einer ersten Richtung (y) parallel zu den Gitterstrichen und einer zweiten Richtung (x) senkrecht zur ersten Richtung definieren und dass die Ausdehnung des Gitters in der ersten Richtung (y) beschränkt ist.

7.  Sensorchip nach einem der vorangehenden Ansprüche, **dadurch gekennzeichnet, dass** mindestens ein 'sensing pad' einer Wellenleitergitterstruktureinheit mindestens ein Einkopplungsgitter und mindestens ein Auskopplungsgitter aufweist und dass die Ausdehnung des mindestens einen Einkopplungsgitters in einer ersten Richtung (y) parallel zu den Gitterstrichen beschränkt und kleiner oder gleich oder grösser ist als jene des mindestens einen Auskopplungsgitters.

8.  Sensorchip nach einem der vorangehenden Ansprüche, **dadurch gekennzeichnet, dass** die Gitterstriche eines Gitters einer Wellenleitergitterstruktureinheit eine Ebene mit einer ersten Richtung (y) parallel zu den Gitterstrichen und einer zweiten Richtung (x) senkrecht zur ersten Richtung definieren und dass die Gitter von zwei 'sensing pads'einander benachbart angeordnet sind und voneinander in der ersten Richtung (y) beabstandet sind.

9.  Sensorchip nach einem der vorangehenden Ansprüche, **dadurch gekennzeichnet, dass** die Gitterstriche einer Wellenleitergitterstruktureinheit eine Ebene mit einer ersten Richtung (y) parallel zu den Gitterstrichen und einer zweiten Richtung (x) senkrecht zur ersten Richtung definieren und dass die Ausdehnung eines Gitters in der zweiten Richtung (x) als Funktion der Position entlang der ersten Richtung (y) konstant ist.

10. Sensorchip nach einem der vorangehenden Ansprüche, **dadurch gekennzeichnet, dass** das Substrat aus Glas oder Kunststoff ist.

11. Sensorchip nach Anspruch 10, **dadurch gekennzeichnet, dass** auf ein Kunststoffsubstrat eine anorganische tiefbrechende Zwischenschicht aufgebracht ist.

12. Sensorchip nach einem der vorangehenden Ansprüche, **dadurch gekennzeichnet, dass** das wellenleitende Material mindestens einen wellenleitenden Film aus einem hochbrechenden Material beinhaltet.

13. Sensorchip nach Anspruch 12, **dadurch gekennzeichnet, dass** das wellenleitende Material einen wellenleitenden Film aus einem hochbrechenden Material und einer Polymerschicht bildet.

14. Sensorchip nach einem der vorangehenden Ansprüche, **dadurch gekennzeichnet, dass** das wellenleitende Material einen wellenleitenden Film bildet, der nicht planparallel zu einer Unterseite des Substrates ist.

15. Sensorchip nach Anspruch 14, **dadurch gekennzeichnet, dass** die Nichtplanparallelität der Unterseite des Substrats bezüglich des wellenleitenden Films in Form von Keilen, Prismen, Zylinderprismen, sphärischen Linsen oder Zylinderlinsen vorliegt.

16. Sensorchip nach einem der vorangehenden Ansprüche, **dadurch gekennzeichnet, dass** das wellenleitende Material mindestens eine Sol-Gel-Schicht oder eine hochbrechende Bleisilikatglasschicht oder eine photopolymerisierbare hochbrechende Schicht oder eine Polymerschicht oder eine PVD-Schicht oder eine CVD-Schicht oder Kombinationen davon beinhaltet.

17. Sensorchip nach einem der vorangehenden Ansprüche, **dadurch gekennzeichnet, dass** die Gitterstrukturen aus UV-härtbaren organischen oder anorganischen Materialien oder organisch/anorganischen Kompositen bestehen.

**18.** Sensorchip nach einem der vorangehenden Ansprüche, **dadurch gekennzeichnet, dass** die Gitterstrukturen mit einer Prägetechnik oder mit einer photolithografischen Technik oder mit einer Gusstechnik oder einer Spritzgusstechnik oder mit Laserabtragung gepaart mit Inteferometrie, Holographie und/oder einer Phasenmaskentechnik hergestellt sind.

**19.** Sensorchip nach einem der vorangehenden Ansprüche, **dadurch gekennzeichnet, dass** die chemosensitiven oder bio-chemosensitiven Substanzen als chemosensitive oder bio-chemosensitive Schichten vorhanden sind.

**20.** Sensorchip nach einem der vorangehenden Ansprüche, **dadurch gekennzeichnet, dass** der Wellenleiter die chemosensitiven oder bio-chemosensitiven Substanzen beinhaltet.

**21.** Sensorchip nach einem der vorangehenden Ansprüche, **dadurch gekennzeichnet, dass** die dem ersten 'sensing pad' zugeordnete chemoempfindliche oder biochemoempfindliche Substanz Spezifität für einen Liganden mit oder ohne 'non-specific binding' zeigt, während die dem zweiten 'sensing pad' zugeordnete chemoempfindliche oder biochemoempfindliche Substanz keine Spezifität mit oder ohne 'non specific binding' aufweist.

**22.** Sensorchip nach einem der vorangehenden Ansprüche, **dadurch gekennzeichnet, dass** die dem ersten sensing pad' zugeordnete chemoempfindliche oder biochemoempfindliche Substanz Spezifität für einen ersten Liganden mit oder ohne 'non-specific binding' zeigt, während die dem zweiten 'sensing pad' zugeordnete chemoempfindliche oder biochemoempfindliche Substanz eine unterschiedliche Spezifität für einen zweiten Liganden mit oder ohne 'non specific binding' aufweist.

**23.** Sensorchip nach einem der vorangehenden Ansprüche, **dadurch gekennzeichnet, dass** Störungen des Messignals, welche durch unspezifische Bindungen in einem 'sensing pad' verursacht werden, mittels Messungen am anderen 'sensing pad' wegreferenzierbar sind.

**24.** Sensorchip nach einem der vorangehenden Ansprüche, **dadurch gekennzeichnet, dass** die bio- und/oder chemoempfindlichen Substanzen so ausgebildet sind, dass
ein erster Ligand an die dem ersten 'sensing pad' zugeordneten bio- und/oder chemoempfindliche Substanz an der Oberfläche bindet und ein zweiter Ligand an die dem zweiten 'sensing pad' zugeordneten chemoempfindlichen oder biochemoempfindlichen Substanz an der Oberfläche bindet
oder
ein erster Ligand an die dem ersten 'sensing pad' zugeordnete bio- und/oder chemoempfindliche Substanz im Innern bindet und ein zweiter Ligand an die dem zweiten 'sensing pad' zugeordnete bio- und/oder chemoempfindliche Substanz im Innern bindet
oder
ein erster Ligand an die dem ersten 'sensing pad' zugeordnete bio- und/oder chemoempfindliche Substanz im Innern bindet und ein zweiter Ligand an die dem zweiten 'sensing pad' zugeordnete bio- und/oder chemoempfindliche Substanz an der Oberfläche bindet
oder
ein erster Ligand an die dem ersten 'sensing pad' zugeordnete bio- und/oder chemoempfindliche Substanz an der Oberfläche und im Innern bindet und ein zweiter Ligand an die dem zweiten 'sensing pad' zugeordnete bio- und/oder chemoempfindliche Substanz im Innern bindet
oder
ein erster Ligand an die dem ersten 'sensing pad' zugeordnete bio- und/oder chemoempfindliche Substanz an der Oberfläche und im Innern bindet und ein zweiter Ligand an die dem zweiten 'sensing pad' zugeordnete bio- und/oder chemoempfindliche Substanz an der Oberfläche bindet
oder
ein erster Ligand an die dem ersten 'sensing pad' zugeordnete bio- und/oder chemoempfindliche Substanz im Innern und an der Oberfläche bindet und ein zweiter Ligand an die dem zweiten 'sensing pad' zugeordnete bio- und/oder chemoempfindliche Substanz im Innern und an der Oberfläche bindet.

**25.** Sensorchip nach einem der vorangehenden Ansprüche, **dadurch gekennzeichnet, dass** die dem ersten 'sensing pad' zugeordnete chemoempfindliche oder biochemoempfindliche Substanz und die dem zweiten 'sensing pad' zugeordnete chemoempfindliche oder biochemoempfindliche Substanz jeweils Dextran aber mit unterschiedlichen Erkennungsmolekülen sind.

**26.** Sensorchip nach einem der vorangehenden Ansprüche, **dadurch gekennzeichnet, dass** zumindest eine einem 'sensing pad' zugeordnete chemoempfindliche oder biochemoempfindliche Substanz Dextran ohne Erkennungsmolekül ist.

27. Sensorchip nach einem der vorangehenden Ansprüche, **dadurch gekennzeichnet, dass** zumindest eine einem 'sensing pad' zugeordnete chemoempfindliche oder biochemoempfindliche Substanz Antikörper und/oder Rezeptoren und/oder DNA-Abschnitte beinhaltet.

28. Sensorchip nach einem der vorangehenden Ansprüche, **dadurch gekennzeichnet, dass** eine 'well' bzw. eine Matrix von 'wells' auf die Wellenleitergitterstruktur aufgebracht oder in die Wellenleitergitterstruktur eingebracht ist.

29. Sensorchip nach einem der vorangehenden Ansprüche, **dadurch gekennzeichnet, dass** eine Durchflusszelle bzw. eine Matrix von Durchflusszellen auf die Wellenleitergitterstruktur aufgebracht oder in die Wellenleitergitterstruktur eingebracht ist.

30. Sensorchip nach einem der vorangehenden Ansprüche, **dadurch gekennzeichnet, dass** eine Kapillarküvette bzw. eine Matrix von Kapillarküvetten auf die Wellenleitergitterstruktur aufgebracht oder in die Wellenleitergitterstruktur eingebracht ist.

31. Sensorchip nach einem der vorangehenden Ansprüche, **dadurch gekennzeichnet, dass** das auf dem Substrat aufgebrachte wellenleitende Material aus mehreren Schichten besteht.

32. Sensorchip nach einem der vorangehenden Ansprüche, **dadurch gekennzeichnet, dass** der Wellenleiter ein Monomodewellenleiter ist.

33. Sensorchip nach einem der vorangehenden Ansprüche, **dadurch gekennzeichnet, dass** zumindest in einer Wellenleitergitterstruktureinheit ein 'sensing pad' als Signalpfad und ein 'sensing pad' als Referenzpfad ausgebildet ist.

34. Sensorchip nach einem der vorangehenden Ansprüche, **dadurch gekennzeichnet, dass** zwei 'sensing pads' gleichzeitig beleuchtet werden.

35. Sensorchip nach einem der vorangehenden Ansprüche, **dadurch gekennzeichnet**, als Lichtquelle eine LED oder eine Laserdiode vorgesehen ist.

36. Sensorchip nach einem der vorangehenden Ansprüche, **dadurch gekennzeichnet, dass** mindestens eine Gitter neben der nullten auch höhere Beugungsordnungen aufweist.

37. Sensorchip, insbesondere nach einem der Ansprüche 1 bis 36, zur Verwendung in einem optischen Sensor zur Charakterisierung und/oder zum Nachweis mindestens einer chemischen und/oder biochemischen Substanz, aufweisend einen Wellenleiter, welcher durch ein Substrat und darauf aufgebrachtes wellenleitendes Material gebildet wird, sowie eine Wellenleitergitterstruktur mit mindestens einem unidiffraktiven oder multidiffraktiven Gitter, wobei Wellenleiter und Wellenleitergitterstruktur so ausgebildet sind, dass Lichtanteile ins Substrat und/oder in ein Covermedium abgestrahlt werden, wenn Licht von der Substratseite und/oder vom Covermedium her zumindest auf einen Teil der Wellenleitergitterstruktur einfällt,
**dadurch gekennzeichnet,**
**dass** die Wellenleitergitterstruktur mindestens eine Wellenleitergitterstruktureinheit umfasst
und **dass** die Kombination von Schichten und Substrat des Wellenleiters, eines Gitterkopplers oder der Wellenleitergitterstruktur so ausgebildet ist, dass der Temperaturkoeffizient dS/dT des Wellenleiters oder des Gitterkopplers oder der Wellenleitergitterstruktur bezüglich mindestens einer Probe und mindestens eines Sensor-Signals S näherungsweise null beträgt.

38. Sensorchip nach Anspruch 37, **dadurch gekennzeichnet, dass** eine der Schichten eine $SiO_2$-Schicht ist.

Fig. 1

$G_{0-} (TM)$   $G_i (TM)$   $G_{0+} (TM)$

$G_{0-} (TE)$   $G_i (TE)$   $G_{0+} (TE)$

Fig. 3

106  101

105
104
102  103

5   6

7  8   9  10

11

2

3   4

Fig. 2

a)

$G_{0-}$ (TM)     $G_i$ (TM)     $G_{0+}$ (TM)

$G_{0-}$ (TE)     $G_i$ (TE)     $G_{0+}$ (TE)

b)

$G_i$ (TM)

$G_{0-}$          $G_{0+}$

$G_i$ (TE)